# EUROPEAN PATENT APPLICATION

(11) **EP 3 094 029 A1**
(43) Date of publication of application: **16.11.2016**
(21) Application number: 16169566.3
(22) Date of filing: 13.05.2016
(51) Int. Cl.: H04L 1/16

(54) **LOW POWER WIRELESS DATA TRANSMISSION PROTOCOL**

(30) Priority: 13.05.2015 US 201514710912
(71) Applicant: Simmonds Precision Products, Inc., Vergennes, VT 05491 (US)
(72) Inventor: RITTENHOUSE, Garret Edward, Burlington, VT 05408 (US)
(74) Representative: Hughes, Andrea Michelle

(57) **Abstract**

A wireless system includes a base station 14 and at least one node 12. The at least one node is configured to communicate wirelessly with the base station. The at least one node is configured to transmit a first data block 32 comprising a plurality of data packets 34. The base station is configured to provide an acknowledgement to the at least one node upon receipt of the first data block. The acknowledgement is indicative of a delivery status for each of the plurality of data packets.

## Description

### BACKGROUND

The present invention relates generally to wireless data transmission, and in particular to a system and method for low power wireless data transmission.

Wireless nodes, such as sensors, may collect data and transmit the data back to a wireless base station. It is desirable for wireless sensors in the field to be low powered in order to facilitate, for example, fewer service requirements. In order for an independent wireless sensor to be low powered, it needs to be capable of efficient data transmission such that the wireless technology of the sensor is required to be powered on for a minimal amount of time. With low speed wireless technologies, streaming of data is limited to the rate at which the data can be collected. If the data is collected at a rate faster than can be transmitted, storage of the data is required which further increases transmission times and power consumption. In order to limit the amount of time that the wireless technology of the sensor is active, the transfer protocol should be efficient in transmission of large collections of data.

### SUMMARY

A wireless system includes a base station and at least one node. The at least one node is configured to communicate wirelessly with the base station. The at least one node is configured to transmit a first data block comprising a plurality of data packets. The base station is configured to provide an acknowledgement to the at least one node upon receipt of the first data block. The acknowledgement is indicative of a delivery status for each of the plurality of data packets.

A method of transmitting data wirelessly includes transmitting, by a wireless node, a first data block that includes a plurality of first data packets to a base station; transmitting, by the base station, a first acknowledgement indicating a first delivery status of each of the first plurality of data packets; and transmitting, by the wireless node, retransmission of each of the first plurality of data packets for which the first delivery status is undelivered.

### BRIEF DESCRIPTION OF THE DRAWINGS

FIG. 1 is block diagram illustrating a wireless system that utilizes a low power wireless transmission protocol.
FIGS. 2A and 2B are diagrams illustrating data transmissions and acknowledgements utilized within a low power wireless transmission system.
FIG. 3 is a flowchart illustrating a method of low power wireless data transmission.

### DETAILED DESCRIPTION

A system and method is disclosed herein for transmitting low power wireless data. The system includes sensors that communicate wirelessly with a base station. The wireless data may be communicated using a low power and low speed protocol with speeds such as, for example, two hundred fifty kilobits/second. Data is transmitted in blocks. Each block comprises a plurality of packets. Each packet includes an indicator of the respective packet's position within the respective block. Following transmission of a block of data from a sensor to the base station, the base station provides an acknowledgement of the received block of data. The acknowledgement includes an indication of the packets that were and were not delivered for the respective block. The wireless sensor retransmits only the packets that were indicated as not received. Once all packets have been received at the base station, then the block transmission is completed. This process is repeated for each block of data for the entirety of the data transmission. By providing a single acknowledgement for each block, rather than an acknowledgement for each individual packet, the data transmission time is reduced and thus, power consumption of the wireless sensors is also reduced.

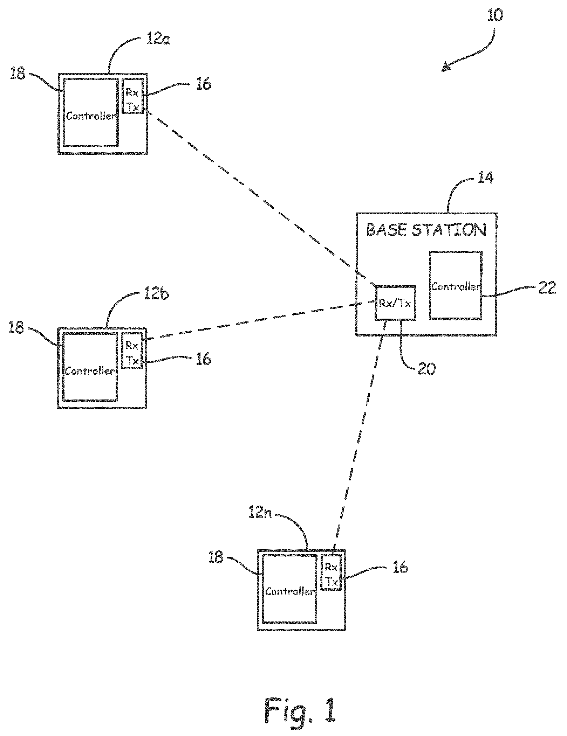

FIG. 1 is a block diagram illustrating wireless system 10 that utilizes a low power, low data rate wireless transmission protocol. System 10 includes wireless nodes 12a-12n and base station 14. Each wireless node 12a-12n includes wireless receiver/transmitter 16 and controller 18. Base station 14 includes receiver/transmitter 20 and controller 22. Nodes 12a-12n are any devices capable of wireless transmission such as, for example, wireless sensors and/or actuators. Base station 14 may be implemented as a computer system configured to wirelessly communicate with nodes 12a-12n. Wireless communication is illustrated with a dashed line in FIG. 1. Receiver/transmitters 16 and 20 may be any components capable of sending and receiving wireless transmissions such as, for example, radio-frequency (RF) antennas. Although illustrated with receiver/transmitter 16 and controller 18, wireless nodes 12a-12n may be implemented with any technology capable of collecting, receiving and transmitting data. Base station 14 may be in any location such as, for example, a ground station or an aircraft.

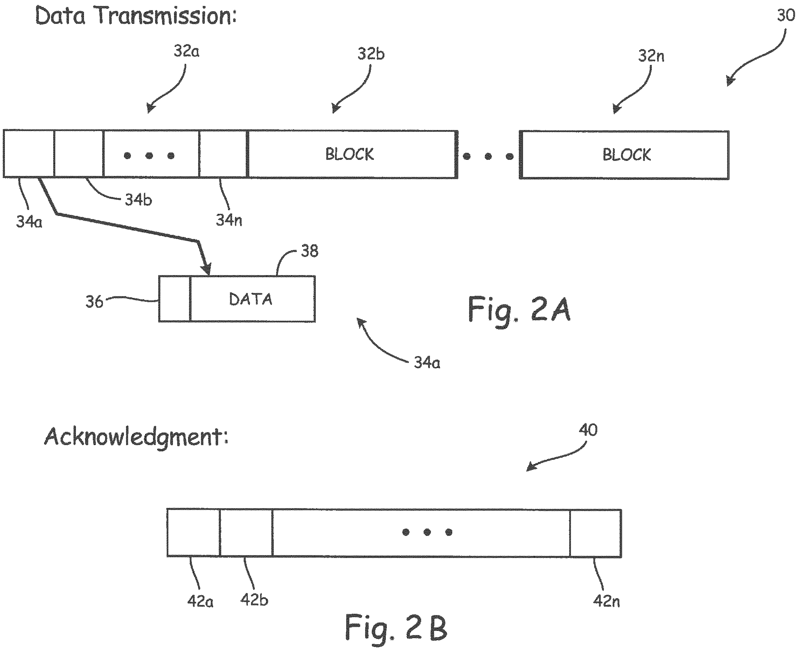

With continued reference to FIG. 1, FIG. 2A is a diagram illustrating a data transmission 30 utilized within wireless system 10 and FIG. 2B is a diagram illustrating acknowledgement 40 utilized within wireless system 10. Data transmission 30 includes data blocks 32a-32n. Each data block 32a-32n includes, for example, data packets 34a-34n. Each data packet 34a-34n includes, for example, a position indicator 36 and data payload 38. Upon receipt of a data block, base station 14 provides acknowledgement 40. Acknowledgement 40 includes packet delivery statuses 42a-42n.

For each data transmission, wireless node 12a, for example, transmits data blocks 32a-32n to base station 14. For each data block, wireless node 12a transmits data packets 34a-34n to base station 14. Following transmission of all data packets 34a-34n, base station 14 transmits acknowledgement 40 to wireless node 12a. Each delivery status 42a-42n indicates whether or not the corresponding packet 34a-34n was delivered. Delivery status 42a-42n may be, for example, a data bit that indicates that a corresponding packet 34a-34n was delivered. For example, delivery status 42a may be a logical one to indicate that packet 34a was delivered, and delivery status 42b may be a logical zero to indicate that packet 34b was not delivered, or vice versa.

Following receipt of acknowledgement 40 from base station 14, wireless node 12a retransmits the packets 34a-34n that were indicated as undelivered by acknowledgement 40. For example, if acknowledgement 40 indicated that four packets 34a-34n were delivered and two packets 34a-34n were undelivered, only the two packets 34a-34n that were indicated as undelivered would be retransmitted. Following retransmission of the two undelivered packets 34a-34n, base station 14 will once again transmit a new acknowledgement 40. This process continues until all packets 34a-34n are indicated by acknowledgement 40 as delivered for block 32a. Following delivery of all packets 34a-34n of block 32a, wireless node 12a begins transmission of block 32b. This process is repeated for all blocks 32a-32n until the data transmission is complete.

For low speed wireless technologies, data packets 34a-34n are often small, having a size, for example, on the order of one hundred twenty-seven bytes and having data transmission rates on the order of two hundred fifty kilobits-per-second. In past systems, base station 14 may have been configured to actively acknowledge receipt of every packet 34a-34n. While this ensured proper receipt of the entire data transmission, this protocol was inefficient in that it required more time for the wireless technology of wireless nodes 12a-12n to be powered on. By utilizing acknowledgement 40 to acknowledge delivery of packets 34a-34n at the block level, the amount of time transmitting acknowledgements from base station 14 to wireless nodes 12a-12n is greatly reduced, which reduces the total transmission time. By reducing the total transmission time, the amount of time the wireless technology of nodes 12a-12n must be powered on is reduced, which reduces the overall power consumption of each node 12a-12n.

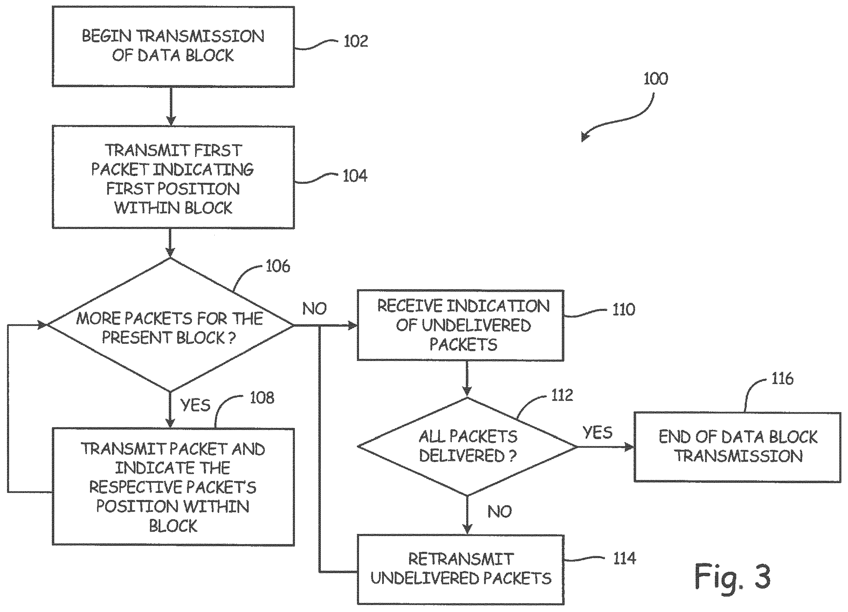

With continued reference to FIGS. 1, 2A, and 2B, FIG. 3 is a flowchart illustrating method 100 of transmitting a data block in low power wireless system 10. At step 102, transmission of one of data blocks 32a-32n is initiated. A data block 32a-32n may be sent from a wireless node 12a-12n to base station 14. At step 104, the first packet 34a of the respective data block 32a-32n is transmitted. Along with payload 38 of the first packet 34a, a position indicator 36 that indicates a position within the respective data block 32a-32n is transmitted. At step 106, it is determined if there are any packets 34a-34n remaining for transmission within the respective data block 32a-32n. If there are remaining packets, method 100 proceeds to step 108. If there are no remaining packets 34a-34n for this respective block 32a-32n, method 100 proceeds to step 110. At step 108, the next packet 34a-34n for the respective data block 32a-32n is transmitted along with position indicator 36 and payload 38 for the respective packet 34a-34n. Following step 108, method 100 returns to step 106 and determines if more packets 34a-34n need to be transmitted for the respective data block 32a-32n.

At step 110, acknowledgement 40 is received indicative of the delivered and undelivered packets 34a-34n for the respective data block 32a-32n. For example, if there are ten packets in a data block, then a ten bit acknowledgement 40 may be received. Each bit may indicate, by a logic one or a logic zero, whether the corresponding data packet 34a-34n was received for the respective data block 32a-32n. For example, at step 112, if all packets 34a-34n were received, acknowledgement 40 may be all zeros. At step 112, if not all packets 34a-34n were received, method 100 proceeds to step 114. If all packets 34a-34n were received, method 100 proceeds to step 116. At step 114, the packets 34a-34n that were indicated as not received are retransmitted. During this retransmission, packets 34a-34n may be sent, for example, in the same manner as they were originally sent, which includes the packet 34a-34n along with a position indicator 36 indicative of the position of packet 34a-34n within the block 32a-32n. Following step 114, method 100 returns to step 110 and once again receives indication of delivered and undelivered packets through acknowledgement 40. At step 116, all packets have been received for the respective data block 32a-32n and thus, the transmission of the respective data block 32a-32n has ended.

### Discussion of Possible Embodiments

The following are non-exclusive descriptions of possible embodiments of the present invention.

A wireless system includes a base station and at least one node. The at least one node is configured to communicate wirelessly with the base station. The at least one node is configured to transmit a first data block comprising a plurality of data packets. The base station is configured to provide an acknowledgement to the at least one node upon receipt of the first data block. The acknowledgement is indicative of a delivery status for each of the plurality of data packets.

The wireless system of the preceding paragraph can optionally include, additionally and/or alternatively, any one or more of the following features, configurations and/or additional components:
A further embodiment of the foregoing wireless system, wherein each of the plurality of data packets comprise a position indicator that indicates a position of a respective data packet in the first data block.

A further embodiment of any of the foregoing wireless systems, wherein the acknowledgement comprises a plurality of bits, and wherein each of the plurality of bits is indicative of the delivery status of a respective data packet in the first data block.

A further embodiment of any of the foregoing wireless systems, wherein the at least one node is further configured to retransmit a subset of the plurality of data packets based upon the delivery status.

A further embodiment of any of the foregoing wireless systems, wherein the subset of the plurality of data packets comprises each of the plurality of data packets that was not delivered to the base station.

A further embodiment of any of the foregoing wireless systems, wherein the at least one node is further configured to retransmit each of the plurality of data packets for which the delivery status is undelivered.

A further embodiment of any of the foregoing wireless systems, wherein the at least one node is further configured to transmit a plurality of second data blocks upon the acknowledgement indicating that the delivery status for each of the plurality of data packets is delivered.

A method of transmitting data wirelessly includes transmitting, by a wireless node, a first data block that includes a plurality of first data packets to a base station; transmitting, by the base station, a first acknowledgement indicating a first delivery status of each of the first plurality of data packets; and transmitting, by the wireless node, retransmission of each of the first plurality of data packets for which the first delivery status is undelivered.

The method of the preceding paragraph can optionally include, additionally and/or alternatively, any one or more of the following features, configurations and/or additional components:
A further embodiment of the foregoing method, further including transmitting, by the wireless node, a second data block that includes a second plurality of data packets to the base station if the first delivery status of each of the first plurality of data packets is delivered.

A further embodiment of any of the foregoing methods, further including transmitting, by the base station, a second acknowledgement indicating a second delivery status of each of the first plurality of data packets following the retransmission of each of the first plurality of data packets for which the first delivery status is undelivered.

A further embodiment of any of the foregoing methods, further including transmitting, by the wireless node, a second data block that includes a second plurality of data packets to the base station if the second delivery status of each of the first plurality of data packets is delivered.

A further embodiment of any of the foregoing methods, further including transmitting, by the base station, a third acknowledgement indicating a third delivery status of each of the second plurality of data packets; and transmitting, by the wireless node, retransmission of each of the second plurality of data packets for which the third delivery status is undelivered.

A further embodiment of any of the foregoing methods, wherein transmitting, by the wireless node, the first data block to a base station that includes a first plurality of data packets includes transmitting a position indicator with each of the first plurality of data packets indicative of a position of a respective one of the plurality of data packets within the first data block.

A wireless sensor includes a wireless receiver/transmitter and a controller. The wireless receiver/transmitter is configured to communicate wirelessly with a base station. The controller is configured to transmit a first data block through the receiver/transmitter including a plurality of data packets, and receive an acknowledgement from the base station through the receiver/transmitter. The acknowledgment is indicative of a delivery status for each of the plurality of data packets.

The wireless sensor of the preceding paragraph can optionally include, additionally and/or alternatively, any one or more of the following features, configurations and/or additional components:
A further embodiment of the foregoing wireless sensor, wherein each of the plurality of data packets comprise a position indicator that indicates a position of a respective data packet in the first data block.

A further embodiment of any of the foregoing wireless sensors, wherein the acknowledgement comprises a plurality of bits, and wherein each of the plurality of bits is indicative of the delivery status of a respective data packet of the plurality of data packets in the first data block.

A further embodiment of any of the foregoing wireless sensors, wherein the controller is further configured to retransmit a subset of the plurality of data packets through the receiver/transmitter based upon the delivery status.

A further embodiment of any of the foregoing wireless sensors, wherein the subset of the plurality of data packets comprises each of the plurality of data packets for which the delivery status was undelivered.

A further embodiment of any of the foregoing wireless sensors, wherein the controller is further configured to retransmit each of the plurality of data packets through the receiver/transmitter for which the delivery status is undelivered.

A further embodiment of any of the foregoing wireless sensors, wherein the controller is further configured to transmit a plurality of second data blocks upon the acknowledgement indicating that the delivery status for each of the plurality of data packets is delivered.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the scope thereof as defined by the claims.

## Claims

1. A wireless system comprising:
a base station (14);
at least one node (12) configured to communicate wirelessly with the base station;
wherein the at least one node is configured to transmit a first data block (32) including a plurality of data packets (34); and
wherein the base station is configured to provide an acknowledgement to the at least one node upon receipt of the first data block, and wherein the acknowledgement is indicative of a delivery status for each of the plurality of data packets.

2. A wireless sensor comprising:
a wireless receiver/transmitter (20) configured to communicate wirelessly with a base station (14);
a controller (18) configured to transmit a first data block (32) through the receiver/transmitter including a plurality of data packets (34), and receive an acknowledgement from the base station through the receiver/transmitter, wherein the acknowledgment is indicative of a delivery status for each of the plurality of data packets.

3. The wireless system of claim 1 or the wireless sensor of claim 2, wherein each of the plurality of data packets comprise a position indicator that indicates a position of a respective data packet in the first data block.

4. The wireless system of claim 1 or 3, or the wireless sensor of claim 2 or 3, wherein the acknowledgement comprises a plurality of bits, and wherein each of the plurality of bits is indicative of the delivery status of a respective data packet of the plurality of data packets in the first data block.

5. The wireless system of claim 1, 3 or 4 or the wireless sensor of claim 1, 3 or 4, wherein the at least one node or the controller is further configured to retransmit a subset of the plurality of data packets based upon the delivery status.

6. The wireless system or sensor of claim 5, wherein the subset of the plurality of data packets comprises each of the plurality of data packets for which the delivery status was undelivered.

7. The wireless system or sensor of claim 6, wherein the at least one node or the controller is further configured to retransmit each of the plurality of data packets through the receiver/transmitter for which the delivery status is undelivered.

8. The wireless system of claim 1 or any claim dependent thereon, or wireless sensor of claim 2 or any claim dependent thereon, wherein the at least one node or the controller is further configured to transmit a plurality of second data blocks upon the acknowledgement indicating that the delivery status for each of the plurality of data packets is delivered.

9. A method of transmitting data wirelessly, the method comprising:
transmitting, by a wireless node, a first data block to a base station that includes a first plurality of data packets;
transmitting, by the base station, a first acknowledgement indicating a first delivery status of each of the first plurality of data packets; and
transmitting, by the wireless node, retransmission of each of the first plurality of data packets for which the first delivery status is undelivered.

10. The method of claim 9, further comprising:
transmitting, by the wireless node, a second data block that includes a second plurality of data packets to the base station if the first delivery status of each of the first plurality of data packets is delivered.

11. The method of claim 9 or 10, further comprising:
transmitting, by the base station, a second acknowledgement indicating a second delivery status of each of the first plurality of data packets following the retransmission of each of the first plurality of data packets for which the first delivery status is undelivered.

12. The method of claim 11, further comprising:
transmitting, by the wireless node, a second data block that includes a second plurality of data packets to the base station if the second delivery status of each of the first plurality of data packets is delivered.

13. The method of claim 12, further comprising:
transmitting, by the base station, a third acknowledgement indicating a third delivery status of each of the second plurality of data packets; and transmitting, by the wireless node, retransmission of each of the second plurality of data packets for which the third delivery status is undelivered.

14. The method of claim 12, wherein transmitting, by the wireless node, the first data block to a base station that includes a first plurality of data packets comprises transmitting a position indicator with each of the first plurality of data packets indicative of a position of a respective one of the plurality of data packets within the first data block.
